# EUROPÄISCHE PATENTSCHRIFT

(11) **EP 2 112 391 B1**
(45) Veröffentlichungstag und Bekanntmachung des Hinweises auf die Patenterteilung: **20.06.2012**
(21) Anmeldenummer: 09001182.6
(22) Anmeldetag: 28.01.2009
(51) Int. Cl.: F16D 48/06

(54) **Verfahren zum Steuern einer Kupplungsanordnung**
Method for controlling a clutch assembly
Procédé destiné à la commande d'un agencement d'embrayage

(30) Priorität: 24.04.2008 DE 102008020578
(43) Veröffentlichungstag der Anmeldung: 28.10.2009
(73) Patentinhaber: GETRAG Getriebe- und Zahnradfabrik Hermann Hagenmeyer GmbH & Cie KG, 74199 Untergruppenbach (DE)
(72) Erfinder: Jung, Markus, 76133 Karlsruhe (DE); Glatthaar, Josef, 78727 Oberndorf (DE); Pawlenka, Andreas, 74613 Öhringen (DE); Rinck, Rainer, 91217 Hersbruck (DE); Schürlein, Markus, 71691 Freiberg am Neckar (DE); Tonn, Armin, 91154 Roth (DE)
(74) Vertreter: Steil, Christian

(56) Entgegenhaltungen:
- EP-A1- 1 559 923
- WO-A2-2007/148203
- DE-A1- 19 504 847

## Beschreibung

Die vorliegende Erfindung betrifft ein Verfahren zum Steuern einer Kupplungsanordnung eines Antriebsstranges eines Kraftfahrzeugs nach dem Oberbegriff von Anspruch 1.

Verfahren zur Regelung einer Kupplung, bei denen ein Kupplungsdruck an ein Sollmoment bzw. ein Motormoment angepasst wird, sind allgemein bekannt.

Üblicherweise werden Kupplungen in einem Antriebsstrang eines Kraftfahrzeugs anhand einer Drehzahldifferenz zwischen einer Kupplungseingangswelle und einer Kupplungsausgangswelle und über ein von einer Antriebsmaschine, insbesondere eines Verbrennungsmotors übertragenen Drehmomentes geregelt. Dabei dienen die Drehzahldifferenz bzw. der Kupplungsschlupf und das Motormoment als Eingabegröße für eine elektronische Steuereinheit, die anhand einer Kennlinie einen Kupplungsdruck einstellt. Der Kupplungsdruck wird üblicherweise mittels einer Hydraulik und eines hydraulischen Aktuators der Kupplung beaufschlagt.

Über die Kennlinie können kupplungsindividuelle Charakteristiken für jede einzelne Kupplung z.B. nach dem Zusammenbau separat bestimmt und korrigiert werden. Üblicherweise wird bei derartigen Korrekturen der Kupplungsdruck in Abhängigkeit des Motormoments angepasst.

Dabei bleiben allerdings einige Betriebsparameter unberücksichtigt, die Auswirkungen auf bestimmte Fahrsituationen haben können.

Aus der DE 197 51 455 A1 ist ein Verfahren zum Regeln einer automatisierten Kupplung bekannt, bei der eine Kennlinie den Kupplungsdruck über einen geregelten Ansteuerstrom der Hydraulik regelt, wobei die Kennlinie regelmäßig adaptiert wird, um eine Differenz zwischen einem Soll- und einem Istkupplungsmoment auszugleichen. Die Kennlinie ist bei diesem Verfahren auch durch eine weitere Größe, die z.B. die Getriebetemperatur sein kann, erweiterbar.

Nachteilig bei dem bekannten Verfahren ist es, dass nur das Motormoment und die Getriebetemperatur zur Anpassung des Kupplungsdrucks berücksichtigt werden.

Aus der EP 1 559 923 A1 ist eine Kupplungssteuerungsvorrichtung bekannt mit einer Korrekturkoeffizientenberechnungseinheit zum Berechnen eines Korrekturkoeffizienten zum Korrigieren eines Kupplungssollmomentes auf der Grundlage einer Differenz zwischen dem Kupplungssollmoment und einem geschätzten Kupplungsistmoment für den Fall, dass ein Antrieb eines Aktuators entsprechend eines Sollwertes des Kupplungssollmomentes gesteuert wird. Eine Kupplungssollmomentberechnungseinheit korrigiert das Kupplungssollmoment auf der Grundlage des Korrekturkoeffizienten, wobei der Korrekturkoeffizient proportional zur Drehzahl der Antriebsmaschine erhöht wird.

Aus der DE 195 04 847 A1 ist ein Verfahren nach dem Oberbegriff des Anspruch 1 zum Steuern einer Kupplungsanordnung eines Antriebsstrangs eines Kraftfahrzeugs bekannt, wobei aus einem vorbestimmten Kupplungskennfeld eine zu einem Kupplungssollmoment gehörende Kupplungsstellgröße bestimmt wird, wobei das Kupplungssollmoment anhand eines Korrekturmomentes korrigiert wird, das als Parameter eines Korrekturkennfeldblocks abgelegt ist, das wenigstens zweidimensional ausgebildet ist und wenigstens ein Drehmoment und wenigstens eine Drehzahl des Antriebsstrangs berücksichtigt, wobei die Stützstellen des Korrekturkennfeldes in ihrer vertikalen Lage regelmäßig verändert werden als Funktion einer gemessenen Kupplungsregelgröße.

Aus der WO 2007/148203 A2 ist ein Verfahren zum Schätzen eines Kupplungsparameters bekannt, bei dem ein dynamisches Modell der Kupplung für den Schlupfbetrieb verwendet wird und eine Drehzahldifferenz zwischen einer gemessenen Eingangsdrehzahl und einer gemessenen Ausgangsdrehzahl der Kupplung anhand des Modells minimiert wird.

Der Erfindung liegt die Aufgabe zugrunde, ein verbessertes Verfahren zur flexiblen Steuerung einer Kupplungsanordnung bereitzustellen.

Diese Aufgabe wird bei dem eingangs genannten Verfahren gelöst, indem der zeitliche Abstand der Änderungsschritte von einem Betrag des Adaptionswertes abhängig ist.

Dadurch lässt sich die Regelgröße besonders präzise einstellen, da die Häufigkeit der Kennfeldkorrektur an eine aktuelle Differenz zwischen dem Kupplungssollmoment und einem Kupplungsistmoment angepasst wird, wodurch eine flexible und bedarfsabhängige Steuerung möglich ist.

Die Aufgabe der Erfindung wird somit vollständig gelöst.

Bevorzugt ist es, wenn in einem Schlupfzustand der Kupplungsanordnung ein Getriebeeingangsmoment als das Drehmoment berücksichtigt wird.

Dadurch lässt sich anhand eines messbaren Wertes ein Korrekturfaktor aus dem Korrekturkennfeld berechnen.

Dabei ist es vorteilhaft, wenn das Getriebeeingangsmoment durch einen Sensor oder ein Momentenmodell oder eine Kombination dessen, ermittelt wird. Dadurch lässt sich das Getriebeeingangsmoment besonders genau bestimmen.

Alternativ ist es vorteilhaft, wenn in einem Schlupfzustand ein von einem Motormoment abgeleitetes Moment als das Drehmoment berücksichtigt wird. Dadurch lässt sich das Drehmoment besonders einfach bestimmen.

Alternativ ist es vorteilhaft, wenn in einem Schlupfzustand das Motormoment als das Drehmoment berücksichtigt wird. Dadurch lässt sich das Drehmoment mit geringem Aufwand erfassen.

Vorzugsweise wird das Motormoment durch einen Sensor oder ein Momentenmodell ermittelt. Dadurch lässt sich das Motormoment besonders einfach bestimmen.

Alternativ ist es vorteilhaft, wenn in einem überpressten Zustand der Kupplungsanordnung das Kupplungssollmoment als das Drehmoment berücksichtigt wird.

Dadurch kann der von der Steuereinheit bereitgestellte Wert direkt verwendet werden, um Korrekturfaktoren aus dem Korrekturkennfeld zu bestimmen.

Weiterhin ist es bevorzugt, wenn eine Kupplungseingangsdrehzahl als die Drehzahl berücksichtigt wird, da die Kupplungseingangsdrehzahl mit geringem Aufwand messtechnisch erfasst werden kann.

Weiterhin ist es vorteilhaft, wenn die Korrekturfaktoren aus dem Korrekturkennfeld mittels eines geeigneten Verfahrens gemittelt, insbesondere zwischen Stützstellen des Korrekturkennfeldes interpoliert werden.

Dadurch kann die Kupplungsregelgröße in Betriebszuständen, die zwischen den Stützstellen des Korrekturkennfeldes liegen, präzise korrigiert werden.

Besonders bevorzugt ist es, wenn die Kupplungsregelgröße zur Adaption der Korrekturfaktoren in einem Schlupfzustand der Kupplungsanordnung gemessen wird.

Dadurch lassen sich Verschleißerscheinungen der Reibkupplung besonders präzise bestimmen.

Weiterhin ist es vorteilhaft, wenn die Kupplungsregelgröße zur Adaption der Korrekturfaktoren bei wenigstens zwei vordefinierten Drehzahlen gemessen wird.

Dadurch lässt sich ein drehzahlabhängiges Kennfeld bestimmen.

Weiterhin ist es bevorzugt, wenn die Adaption pro Änderungsschritt jeweils nicht größer ist als ein vorbestimmter Maximalwert.

Dadurch kann eine abrupte Änderung der Korrekturfaktoren und die damit verbundene abrupte Änderung des Kupplungsmomentes verhindert werden.

Ferner ist es vorteilhaft, wenn das Korrekturkennfeld aus einer Mehrzahl von momentenabhängigen Regressionsgeraden für unterschiedliche Drehzahlen gebildet wird.

Durch diese Regressionsgeraden lassen sich momentenabhängige Schwankungen des Korrekturfaktors ausgleichen, wodurch eine ungleichmäßige Beschleunigungscharakteristik vermieden werden kann.

Das vorliegende Verfahren ist generell sowohl auf trockene, insbesondere elektromechanisch betätigte Kupplungssysteme, als auch auf nasslaufende Kupplungen anwendbar.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstrangs mit einer Korrektur- steueranordnung und einer Regelanordnung zur Steuerung einer Kupp- lungsanordnung;
- Fig. 2: eine schematische Darstellung eines Korrekturkennfeldes gemäß einer bevorzugten Ausführungsform des erfindungsgemäßen Verfahrens;
- Fig. 3: eine Darstellung einer drehmomentabhängigen Regressionsgeraden zur Bestimmung eines Korrekturfaktors.

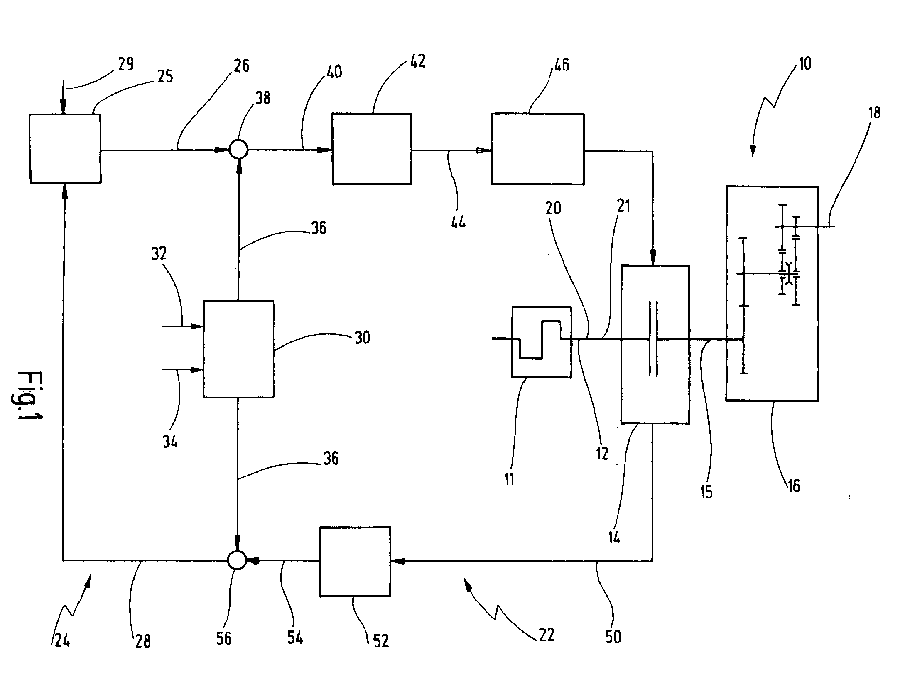

In Fig. 1 ist der Antriebsstrang generell mit 10, die Korrektursteueranordnung generell mit 22 und die Regelanordnung generell mit 24 bezeichnet.

Der Antriebsstrang 10 weist eine Antriebseinheit 11 auf, die über eine Kurbelwelle 12 mit einer Kupplungsanordnung 14 verbunden ist.

Die Kupplungsanordnung 14 ist über eine Getriebeeingangswelle 15 mit einem Getriebe 16 verbunden. Das Getriebe weist eine Kardanwelle 18 auf, die üblicherweise über ein nicht dargestelltes Differentialgetriebe mit wenigstens einer nicht dargestellten Antriebsachse eines Kraftfahrzeugs verbunden ist. Die Antriebseinheit 11 überträgt über die Kurbelwelle 12 ein Motormoment 20 an die Kupplungsanordnung 14. Dabei rotiert die Kurbelwelle 12 mit einer Kupplungseingangsdrehzahl 21. Die Kupplungsanordnung 14 überträgt in einem geschlossenen Zustand das Motormoment 20 über die Getriebeeingangswelle 15 an das Getriebe 16. Das Getriebe 16 übersetzt das Motormoment 20 und die Kupplungseingangsdrehzahl 21 entsprechend einer eingelegten Gangstufe und überträgt dies an die Kardanwelle 18.

Die Kupplungsanordnung 14 ist über die Korrektursteueranordnung 22 mit der Regelanordnung 24 verbunden. Die Regelanordnung 24 weist eine Steuereinheit 25 auf, die ein Kupplungssollmoment 26 als Stellgröße ausgibt. Der Steuereinheit 25 wird ein adaptiertes Kupplungsistmoment 28 als Eingangsgröße eingegeben. Die Steuereinheit 25 weist weiterhin eine Steuersignalleitung 29 auf. Das Kupplungssollmoment 26 wird an die Korrektursteueranordnung 22 gegeben und die Regelanordnung 24 erhält das adaptierte Kupplungsistmoment 28 von der Korrektursteueranordnung 22. Die Steuereinheit 25 erhält verschiedene Steuersignale über die Steuersignalleitung 29.

Die Korrektursteueranordnung 22 weist ein Korrekturkennfeld 30 auf, das als Eingangsgrößen ein Drehmoment 32 und eine Drehzahl 34 aufweist. Das Korrekturkennfeld 30 gibt einen Korrekturfaktor 36 an einen Funktionsblock 38, der als eine weitere Eingangsgröße das Kupplungssollmoment 26 aufweist. Der Funktionsblock 38 weist als eine Ausgangsgröße ein adaptiertes Kupplungsmoment 40 auf, das an ein Kupplungskennfeld 42 übergeben wird. Das Kupplungskennfeld 42 gibt eine Kupplungsstellgröße 44 an eine Aktuatoranordnung 46, die mit der Kupplungsanordnung 14 verbunden ist. Die Kupplungsstellgröße 44 kann ein Kupplungsdruck, ein Kupplungsweg oder dergleichen sein.

Es versteht sich, dass die Aktuatoranordnung 46 nicht dargestellte Komponenten wie z.B. Hydraulikleitungen aufweist, um die Kupplungsanordnung 14 zu betätigen.

In dem Korrekturkennfeld 30 sind die Korrekturfaktoren 36 für verschiedene der Drehzahlen 34 und verschiedene der Drehmomente 32 abgelegt. Anhand des Drehmomentes 32 und der Drehzahl 34, die als Eingangsgrößen für das Korrekturkennfeld 30 dienen, wird ein Korrekturfaktor 36 ausgewählt und an den Funktionsblock 38 gegeben. Aufbau und Funktionsweise des Korrekturkennfelds 30 wird im Weiteren näher erläutert. Der Funktionsblock 38 multipliziert das Kupplungssollmoment 26 mit dem Korrekturfaktor 36, wodurch das adaptierte Kupplungsmoment 40 als Ausgangsgröße bzw. Ergebnis erhalten wird, das an das Kupplungskennfeld 42 gegeben wird. Das Kupplungskennfeld 42 ist ein vorbestimmtes Kennfeld, das für ein Drehmoment eine zugehörige Stellgröße bestimmt. In diesem Fall bestimmt das Kupplungskennfeld 42 die zu dem adaptierten Kupplungsmoment 40 gehörende Kupplungsstellgröße 44, die an die Aktuatoranordnung 46 gegeben wird. Die Aktuatoranordnung 46 betätigt die Kupplungsanordnung 14 entsprechend der Kupplungsstellgröße 44.

Mittels eines nicht dargestellten Sensors wird eine Kupplungsregelgröße 50 der Kupplungsanordnung 14 erfasst und als Eingangsgröße an ein Kupplungskennfeld 52 gegeben. Das Kupplungskennfeld 52 gibt ein Default-Kupplungsmoment 54 als Eingangsgröße an einen Funktionsblock 56. Der Funktionsblock 56 weist als eine weitere Eingangsgröße den Korrekturfaktor 36 auf, der, wie oben beschrieben, in Abhängigkeit der Drehzahl 34 und des Drehmoments 32 bereitgestellt wird. Der Funktionsblock 56 gibt das adaptierte Kupplungsistmoment 28 an die Regelanordnung 24, in der das adaptierte Kupplungsistmoment 28 der Steuereinheit 25 als Eingangsgröße dient.

Der Sensor erfasst die Kupplungsregelgröße 50 der Kupplungsanordnung 14 und gibt die Kupplungsregelgröße 50 an das Kupplungskennfeld 52. Das Kupplungskennfeld 52 ist allgemein als invertiertes Kennfeld des Kupplungskennfeldes 42 zu verstehen und bestimmt anhand der Kupplungsregelgröße 50 das Default-Kupplungsmoment 54. Der Funktionsblock 56 berechnet aus dem Default-Kupplungsmoment 54 und dem Korrekturfaktor 36 das adaptierte Kupplungsistmoment 28. Dabei wird das adaptierte Kupplungsistmoment 28 durch einen Quotienten aus dem Default-Kupplungsmoment 54 und dem Korrekturfaktor 36 gebildet. Das adaptierte Kupplungsistmoment 28 wird an die Regelanordnung 24 gegeben und dient der Steuereinheit 25 als Eingangsgröße.

Durch diese Korrektursteueranordnung 22 kann die Kupplungsregelgröße 50 über das Korrekturkennfeld 30 in Abhängigkeit der Drehzahl 34 und des Drehmoments 32 beliebig korrigiert werden. Dadurch wird eine Fliehkraftkompensation der Kupplung erreicht. Weiterhin kann dadurch eine drehzahlabhängige Druckverschiebung (Druckoffset) in der Kupplungsanordnung korrigiert werden. Vorzugsweise erfolgt über das Korrekturkennfeld 30 eine Korrektur von Verschleißerscheinungen der gesamten Kupplungsanordnung. Allerdings ist es auch denkbar, dass dadurch eine Anpassung an Fahrsituationen oder verschiedene Fahrmodi realisiert werden.

Vorzugsweise wird in einem Schlupfbetrieb das Motormoment 20 als das Drehmoment 32 und in einem überpressten Zustand der Kupplungsanordnung 14 das Sollmoment 26 als das Drehmoment 32 verwendet und dem Korrekturkennfeld 30 eingegeben. Als die Drehzahl 34 wird vorzugsweise die Kupplungseingangsdrehzahl 21 verwendet.

Es versteht sich, dass das in Fig. 1 dargestellte Getriebe allgemein anzusehen ist und sowohl als Handschaltgetriebe als auch als automatisches Getriebe ausgeführt sein kann.

Die Kupplungsanordnung 14 ist in Verbindung mit der Aktuatoranordnung 46 ebenfalls allgemein anzusehen und kann sowohl als nass laufende Kupplung als auch als hydraulisch betriebene Reibkupplung ausgebildet sein. Weiterhin ist es denkbar, dass statt der Aktuatoranordnung 46 ein elektrisch betriebener Aktuator verwendet wird, der eine Reibkupplung betätigt. Das dargestellte Verfahren wird vorzugsweise in einem Antriebsstrang mit einem Doppelkupplungsgetriebe verwendet.

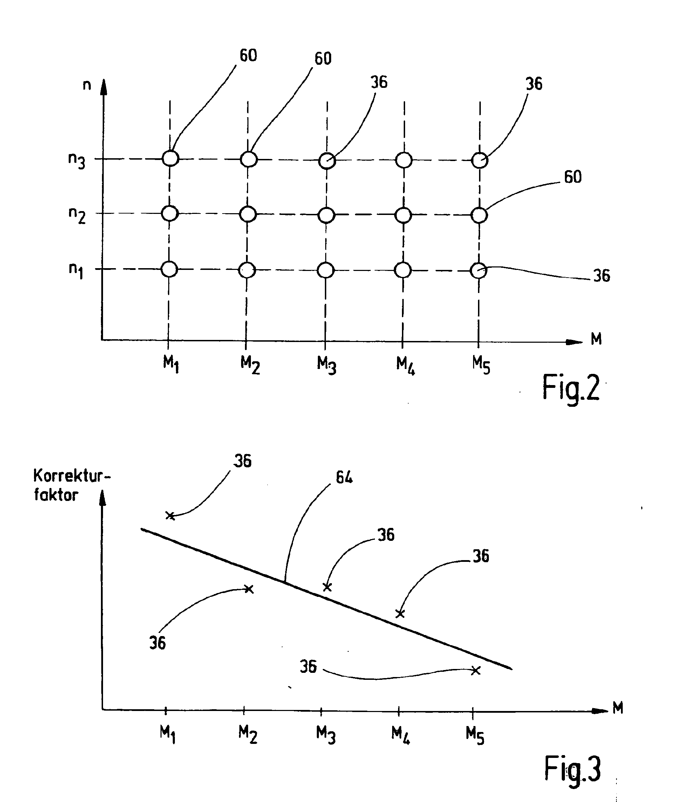

Fig. 2 zeigt eine schematische Darstellung einer Ausführungsform des Korrekturkennfeldes 30. In dem Korrekturkennfeld 30 sind fünfzehn Stützstellen 60 in Abhängigkeit der Drehzahl 34 (n) und des Drehmomentes 32 (M) dargestellt. Die Stützstellen 60, die jeweils einer bestimmten Drehzahl 34 (n) und einem gewissen Drehmoment 32 (M) zugeordnet sind, weisen als Parameter jeweils einen der Korrekturfaktoren 36 auf. Die Stützstellen 60 und die Korrekturfaktoren 36 sind in Fig. 2 nur beispielhaft mit Bezugszeichen versehen. Im Betrieb wird bei einer bestimmten Drehzahl 34 (n) und einem bestimmten Drehmoment 32 (M) der der entsprechenden Stützstelle 60 zugeordnete Korrekturfaktor 36 entnommen bzw. ausgelesen und wie in Fig. 1 beschrieben zur Korrektur des Kupplungssollmomentes 26 bzw. des adaptierten Kupplungsistmomentes 28 verwendet. Für Drehzahl-Drehmoment-Kombinationen, denen keine konkrete Stützstelle 60 zugeordnet ist, werden Korrekturfaktoren 36, die zwischen den Stützstellen 60 liegen, interpoliert. Die Interpolation kann dabei linear durchgeführt werden oder aber auch entsprechend einer beliebigen Näherungsfunktion. Eine Extrapolation von Stützstellen, die außerhalb des Kennfeldes liegen, ist nicht zweckmäßig, allerdings unter besonderen Bedingungen denkbar.

Üblicherweise sind alle Korrekturfaktoren 36 in dem Korrekturkennfeld 30 in einem Grundzustand als "1" vordefiniert. Durch die Funktionsblöcke 38, 56 ergibt sich, dass in diesem Fall keine Korrektur erfolgt. Zur Adaption des Korrekturkennfeldes 30 im Betrieb wird das Default-Kupplungsmoment 54 bestimmt und das Motormoment 20 bei einer bestimmten Drehzahl 34 und einem bestimmten Drehmoment 32 gemessen. Das Default-Kupplungsmoment 54 entspricht einem aus der gemessenen Kupplungsregelgröße 50 und dem Kupplungskennfeld 52 berechneten Moment, das von der Kupplungsanordnung 14 übertragen wird. Zur Adaption wird zunächst ein Abweichungswert berechnet, der sich aus dem Quotienten des Default-Kupplungsmomentes 54 und dem Motormoment 20 ergibt. Sofern der Abweichungswert von dem der entsprechenden Stützstelle 60 zugeordneten Korrekturfaktor 36 aus dem Korrekturkennfeld 30 abweicht, wird der entsprechende Korrekturfaktor 36 angepasst. Sofern der Abweichungswert größer ist als der Korrekturfaktor 36 wird der Korrekturfaktor 36 um einen Adaptionswert erhöht. Sofern der Abweichungswert kleiner ist als der Korrekturfaktor 36, wird der Korrekturfaktor 36 um den Adaptionswert verringert. Der Betrag des Adaptionswerts ist auf einen Maximalwert beschränkt, wobei der Maximalwert in einer bevorzugten Ausführungsform 0,003 beträgt. Sofern die Differenz zwischen dem Abweichungswert und dem entsprechenden Korrekturfaktor 36 gering ist, kann der Adaptionswert einen Wert entsprechend einer vorbestimmten Funktion zwischen null und dem Maximalwert annehmen.

Vorzugsweise werden die Korrekturfaktoren 36 regelmäßig überprüft und unter den oben genannten Bedingungen entsprechend angepasst. Die Adaption der Kupplung erfolgt im Allgemeinen inkrementell, d.h. die Häufigkeit der Adaption der Korrekturfaktoren 36 des Korrekturkennfeldes 30 nimmt mit der Abweichung von dem Motormoment zu dem adaptierten Kupplungsmoment zu. Das heißt, der zeitliche Abstand zwischen den Anpassungsschritten ist vorzugsweise variabel und abhängig von der zuvor festgestellten Differenz zwischen dem Abweichungswert und dem Adaptionsfaktor 36. Die Adaption kann in Abhängigkeit der Abweichung permanent oder zeitlich gesteuert ablaufen, z.B. alle 10 Minuten.

Zur Durchführung dieser Anpassung der Korrekturfaktoren 36 wird die Kupplungsanordnung 14 vorzugsweise in einen Schlupfzustand gebracht. Bei einem bestimmten Drehmoment und einer bestimmten Drehzahl, die jeweils einem Wertepaar einer Stützstelle 60 des Korrekturkennfeldes 30 entsprechen, wird die Kupplungsregelgröße 50 ermittelt und wie oben beschrieben mittels des Default-Kupplungsmomentes 54 der Abweichungswert bestimmt. Der berechnete Abweichungswert wird mit dem Korrekturfaktor 36 der entsprechenden Stützstelle 60 verglichen und wie oben beschrieben adaptiert.

Vorzugsweise ist das adaptierte Korrekturkennfeld 30 in einem nicht flüchtigen Speicher abgelegt, so dass das korrigierte Korrekturkennfeld 30 auch nach zwischenzeitlicher Abschaltung der elektrischen Energieversorgung zur Verfügung steht.

Üblicherweise werden Abweichungswerte, die sehr stark von üblichen Werten abweichen, nicht für eine Adaption verwendet, sondern verworfen. Derartige Streuungen können beispielsweise bei Kurvenfahrt, Verlustmomente durch nicht abgebildete Nebenaggregate, Vibrationen im Schlupfbetrieb oder dergleichen entstehen.

Durch diese Adaption kann ein Reibverschleißwert über die Lebensdauer von bis zu 10 % korrigiert werden.

Fig. 3 zeigt ein Diagramm von Korrekturfaktoren 36 in Abhängigkeit des Drehmomentes 32 für fünf unterschiedliche Drehmomente 32 (M). In Fig. 3 ist eine Regressionsgerade 64 dargestellt, die als Ausgleichsgerade der Korrekturfaktoren 36 bestimmt ist. Das in Fig. 3 dargestellte Diagramm stellt die Korrekturfaktoren 36 für eine bestimmte Drehzahl 34 (n) dar. Bei der Verwendung der Korrekturfaktoren 36, wie es in Fig. 1 dargestellt ist, werden vorzugsweise nicht die einzelnen Korrekturfaktoren 36 verwendet, sondern die in Fig. 3 dargestellte Regressionsgerade 64. Die Regressionsgerade 64 gleicht Streuungen aus und bewirkt, dass die entnommenen Korrekturfaktoren 36 bzw. die interpolierten Korrekturfaktoren 36 keinen starken Schwankungen unterliegen. Dadurch können unstetige Stellen korrigiert bzw. ausgeglichen werden und es kann z.B. ein harmonischeres Beschleunigungsverhalten des Fahrzeugs erzielt werden.

Auch ist es denkbar, die in Fig. 3 dargestellte Regressionsgerade in dem Korrekturkennfeld 30, wie es in Fig. 2 dargestellt ist, zu verwirklichen. Dazu werden für jede in dem Korrekturkennfeld 30 abgebildete Drehzahl 34 (n) eine Regressionsgerade 64 in Abhängigkeit des Drehmomentes 32 (M) bestimmt. Somit entsteht für jede in dem Korrekturkennfeld 30 berücksichtigte Drehzahl 34 (n) eine eigene Regressionsgerade 64. Es ist alternativ auch denkbar, Regressionsgeraden für bestimmte Drehmomente 32 (M) in Abhängigkeit der Drehzahl 34 (n) zu bestimmen.

## Patentansprüche

1. Verfahren zum Steuern einer Kupplungsanordnung (14) eines Antriebsstrangs (10) eines Kraftfahrzeugs, wobei aus einem vorbestimmten Kupplungskennfeld (42, 52) eine zu einem Kupplungssollmoment (26) gehörende Kupplungsstellgröße (44) bestimmt wird, wobei das Kupplungssollmoment (26) anhand von Korrekturfaktoren (36) korrigiert wird, die als Parameter eines Korrekturkennfeldes (30) abgelegt sind, das wenigstens zweidimensional ausgebildet ist und wenigstens ein Drehmoment (32) und wenigstens eine Drehzahl (34) des Antriebsstrangs (10) berücksichtigt, wobei die Korrekturfaktoren (36) einzeln anhand einer gemessenen Kupplungsregelgröße (50) und des Kupplungskennfeldes (42, 52) regelmäßig adaptiert werden, wobei die Adaption der Korrekturfaktoren (36) schrittweise um jeweils einen Adaptionswert erfolgt und ein zeitlicher Abstand der Änderungsschritte variabel ist, **dadurch gekennzeichnet, dass** der zeitliche Abstand der Änderungsschritte von einem Betrag des Adaptionswertes abhängig ist.

2. Verfahren nach Anspruch 1, wobei in einem Schlupfzustand der Kupplungsanordnung (14) ein Getriebeeingangsmoment als das Drehmoment (32) berücksichtigt wird.

3. Verfahren nach Anspruch 2, wobei das Getriebeeingangsmoment durch einen Sensor oder ein Momentenmodell oder eine Kombination dessen, ermittelt wird.

4. Verfahren nach Anspruch 1, wobei in einem Schlupfzustand der Kupplungsanordnung (14) ein Motormoment (20) als das Drehmoment (32) berücksichtigt wird.

5. Verfahren nach Anspruch 4, wobei in einem Schlupfzustand der Kupplungsanordnung (14) ein von dem Motormoment (20) abgeleitetes Moment als das Drehmoment (32) berücksichtigt wird.

6. Verfahren nach Anspruch 1, wobei in einem überpressten Zustand der Kupplungsanordnung (14) das Kupplungssollmoment (26) als das Drehmoment (32) berücksichtigt wird.

7. Verfahren nach einem der Ansprüche 1 bis 6, wobei eine Kupplungseingangsdrehzahl (21) als die Drehzahl (34) berücksichtigt wird.

8. Verfahren nach einem der Ansprüche 1 bis 7, wobei die Korrekturfaktoren (36) zwischen Stützstellen (60) des Korrekturkennfeldes (30) interpoliert werden.

9. Verfahren nach einem der Ansprüche 1 bis 8, wobei die Kupplungsregelgröße (50) zur Adaption der Korrekturfaktoren (36) in einem Schlupfzustand der Kupplungsanordnung (14) gemessen wird.

10. Verfahren nach einem der Ansprüche 1 bis 8, wobei die Kupplungsregelgröße (50) zur Adaption der Korrekturfaktoren (36) bei wenigstens zwei vordefinierten Drehzahlen (34) gemessen wird.

11. Verfahren nach Anspruch 1 bis 10, wobei die Adaption pro Änderungsschritt jeweils nicht größer ist als ein vorbestimmter Maximalwert.

12. Verfahren nach einem der Ansprüche 1 bis 11, wobei das Korrekturkennfeld (30) aus einer Mehrzahl momentenabhäniger Regressionsgeraden (64) für unterschiedliche der Drehzahlen (34) des Antriebsstrangs (10) gebildet wird.

## Claims

1. Method for controlling a clutch assembly (14) of a drive train (10) of a motor vehicle, wherein a clutch correcting variable (44) corresponding to a clutch set point torque (26) is determined on the basis of a predefined clutch characteristic diagram (42, 52), wherein the clutch set point torque (26) is corrected by means of correction factors (36), which are stored as parameters of a correction characteristic diagram (30), which is formed at least two - dimensional and takes at least one torque (32) and at least one rotation speed (34) of the drive train (10) into account, wherein the correction factors (36) are adapted on a regular basis individually by means of a measured clutch controlled value (50) and the clutch characteristic diagram (42, 52), wherein the correction factors (36) are adapted stepwise in each case by an adaption value and wherein a time interval of the adaption steps is variable, **characterized in that** the time interval of the adaption steps is dependent on an absolute value of the adaption value.

2. Method according to claim 1, wherein in a slip state of the clutch assembly (14) a transmission input torque is taken into account as the torque (32).

3. Method according to claim 2, wherein the transmission input torque is determined by means of a sensor or a torque model or a combination thereof.

4. Method according to claim 1, wherein in a slip state of the clutch assembly (14) a motor torque (20) is taken into account as the torque (32).

5. Method according to claim 4, wherein in a slip state of the clutch assembly (14) a torque derived from the motor torque (20) is taken into account as the torque (32).

6. Method according to claim 1, wherein in an overpressed state of the clutch assembly (14) the clutch set point torque (26) is taken into account as the torque (32).

7. Method according to any of claims 1 to 6, wherein a clutch input rotation speed (21) is taken into account as the rotation speed (34).

8. Method according to any of claims 1 to 7, wherein the correction factors (36) between nodes (60) of the correction characteristic diagram (30) are interpolated.

9. Method according to any of claims 1 to 8, wherein the clutch controlled value (50) for adaption of the correction factors (36) is measured in a slip state of the clutch assembly (14).

10. Method according to any of claims 1 to 8, wherein the clutch controlled value (50) for adaption of the correction factors (36) is measured at at least two predefined rotation speeds (34).

11. Method according to claim 1 to 10, wherein the adaption per adaption step is not greater than a predefined maximum value.

12. Method according to any of claims 1 to 11, wherein the correction characteristic diagram (30) is formed of a plurality of torque - dependent regression lines (64) for different rotation speeds (34) of the drive train (10).

## Revendications

1. Procédé de commande d'un ensemble d'embrayage (14) du train d'entraînement (10) d'un véhicule automobile, dans lequel
une grandeur (44) de réglage d'embrayage qui fait partie d'un couple de consigne d'embrayage (26) est déterminée à partir d'un champ prédéterminé (42, 52) de caractéristiques d'embrayage,
le couple de consigne d'embrayage (26) est corrigé à l'aide de facteurs de correction (36) conservés sous la forme de paramètres d'un champ (30) de caractéristiques de correction conçu en au moins deux dimensions et prenant en compte au moins un couple de rotation (32) et au moins une vitesse de rotation (34) du train d'entraînement (10),
les facteurs de correction (36) étant adaptés individuellement à l'aide d'une grandeur mesurée (50) de régulation de l'embrayage et du champ (42, 52) de caractéristiques d'embrayage,
l'adaptation des facteurs de correction (36) s'effectuant par pas d'une valeur d'adaptation et l'écart temporel entre les pas d'adaptation pouvant être varié,
**caractérisé en ce que**
l'écart temporel entre les pas d'adaptation dépend du niveau de la valeur d'adaptation.

2. Procédé selon la revendication 1, dans lequel le couple appliqué à l'entrée de la transmission intervient comme couple de rotation (32) dans la détermination de l'état de patinage de l'ensemble d'embrayage (14).

3. Procédé selon la revendication 2, dans lequel le couple appliqué à l'entrée de la transmission est déterminé par une sonde, un modèle des moments ou une de leurs combinaisons.

4. Procédé selon la revendication 1, dans lequel le couple (20) du moteur intervient comme couple de rotation (32) dans la détermination de l'état de patinage de l'ensemble d'embrayage (14).

5. Procédé selon la revendication 4, dans lequel un couple dérivé du couple (20) du moteur intervient comme couple de rotation (32) dans la détermination de l'état de patinage de l'ensemble d'embrayage (14).

6. Procédé selon la revendication 1, dans lequel le couple de consigne (26) de l'embrayage intervient comme couple de rotation (32) lorsque l'ensemble d'embrayage (14) est dans un état de surpression.

7. Procédé selon l'une des revendications 1 à 6, dans lequel la vitesse de rotation (21) à l'entrée de l'embrayage intervient comme vitesse de rotation (34).

8. Procédé selon l'une des revendications 1 à 7, dans lequel les facteurs de correction (36) sont interpolés entre les points d'appui (60) du champ (30) de caractéristiques de correction.

9. Procédé selon l'une des revendications 1 à 8, dans lequel la grandeur (50) de régulation de l'embrayage qui sert à adapter les facteurs de correction (36) est mesurée lorsque l'ensemble d'embrayage (14) est dans une situation de patinage.

10. Procédé selon l'une des revendications 1 à 8, dans lequel la grandeur (50) de régulation de l'embrayage qui sert à adapter les facteurs de correction (36) est mesurée à au moins deux vitesses de rotation (34) définies.

11. Procédé selon l'une des revendications 1 à 10, dans lequel lors de chaque pas de modification, l'adaptation n'est pas supérieure à une valeur maximale prédéterminée.

12. Procédé selon l'une des revendications 1 à 11, dans lequel le champ (30) de caractéristiques de correction est formé de plusieurs droites de régression (64) qui dépendent du couple à différentes vitesses de rotation (34) du train d'entraînement (10).
